Europäisches Patentamt

European Patent Office

Office européen des brevets

(19)

(11) Publication number: **0 216 733 B1**

# EUROPEAN PATENT SPECIFICATION

(12)

(45) Date of publication of patent specification: **07.10.92**  (51) Int. Cl.5: **H02P 8/00**, H02P 6/02

(21) Application number: **86830101.1**

(22) Date of filing: **30.04.86**

(54) Modifications of a self- synchronous motor for step-by-step driving.

(30) Priority: **03.05.85 IT 342785**

(43) Date of publication of application:
**01.04.87 Bulletin 87/14**

(45) Publication of the grant of the patent:
**07.10.92 Bulletin 92/41**

(84) Designated Contracting States:
**AT BE CH DE FR GB LI LU NL SE**

(56) References cited:
**DE-A- 2 815 217**

**IBM TECHNICAL DISCLOSURE BULLETIN, vol.
27, no. 10B, page 6338, March 1985;
"Adaptable open-loop step motor control"**

**IBM TECHNICAL DISCLOSURE BULLETIN, vol.
27, no. 6, pages 3570/3571, November 1984;
"Step motors with high cogging torque"**

**IBM TECHNICAL DISCLOSURE BULLETIN, vol.
24, no. 10, March 1992, pages 5013-5014**

(73) Proprietor: **Merlo, Carmelo
Via Umberto I, 95
Acciarello Di Villa S. Giovanni Reggio Cala-
bria(IT)**

(72) Inventor: **Merlo, Carmelo
Via Umberto I, 95
Acciarello Di Villa S. Giovanni Reggio Cala-
bria(IT)**

(74) Representative: **Trentini, Ermanno
Studio Brevetti Internazionali Ing. E. Trentini
Via U. Lenzi, 2
I-40122 Bologna(IT)**

EP 0 216 733 B1

# Description

The invention relates to the modifications needed to transform a synchronous motor, as that claimed in the Italian priority document No 3426A/85 available for inspection in the file EP-A-208657, into a motor with two drive modes, i.e. step-by-step and constant running. It is well known that current electronics technology makes wide use of digital automatic commands in place of analogue continuous commands, hence the need for a motor which can turn drive digital data into precise angular rotations (steps) of the motor, while, at the same time, retaining the option of constant deflecting torque drive throughout the 360° rotation angle, corresponding to a full rotation, as in a standard running motor, thus solving one of the main problems of servomotors in the technical applications of automation.

These and other ends are achieved by the said invention which is characterized by the features of claim 1 motor supplied with a rotor position detector and a micro-.

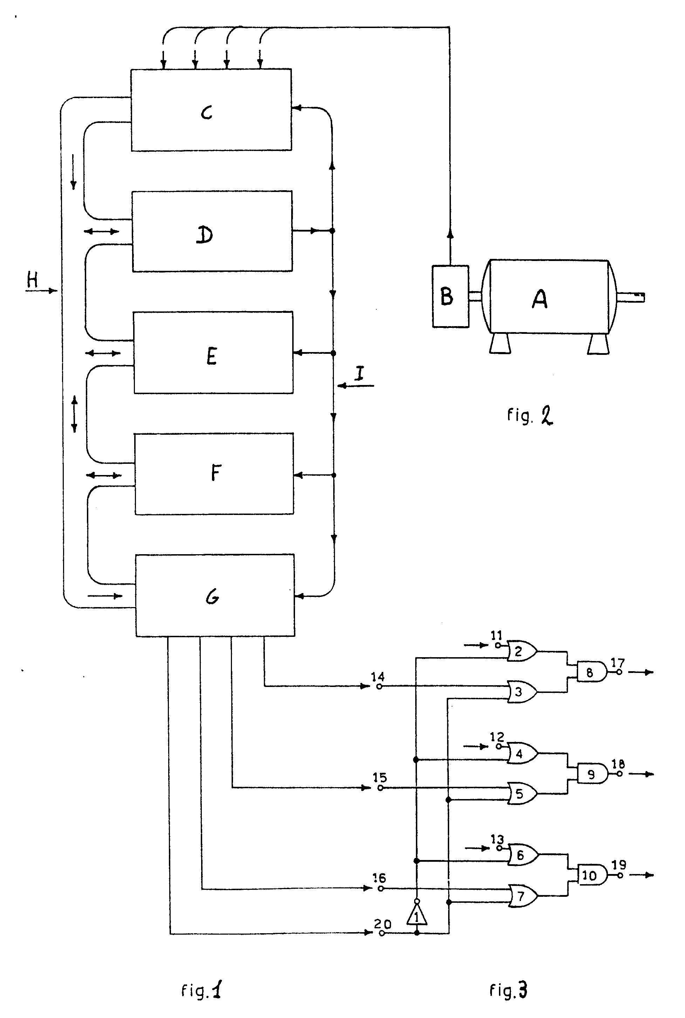

That is achieved by a logic interface between the micro-data processor and the motor's three-phase inverter. The said logic interface nullifies by means of an appropriate control signal from the micro-data processor the stator's field configuration, generated by the rotary commutator and replaces it with one of the stator field configurations stored in the memory of the driving system, selected by the micro-data processor according to the rotor positional data and to the step mode required by the device using it. These and other objects of the invention will become more apparent in the following simplified description, given to be interpreted for an illustrative purpose with reference to the enclosed dratings, where TAB. I and Fig. 1 show the micro-computer block design, Fig. 2 illustrates the synchronous motor with a coaxial position sensor, Fig. 3 illustrates the interface logic between the micro-computer and the motor's three phase inverter. In relation to these figures, A indicates the synchronous motor, B the position sensor, C the data input interface, D tie INS 8070 type micro-data processor, F the EPROM 2716 type programme memory, F the RAM 2114 type data storage, G the data transmission interface, H the system of conductors (BUS) connecting the micro-data processor to the other sections of the micro-computer, and I the command lines through which the micro-data processor controls all the units of the system. Fig.3 shows the interface logic design, built with SN74000N integrated circuits, which is inserted in the circuit shown in Fig. 19 of TAB. 7, Patent of the priority document No 3426A/85 available for inspection in the file EP-A-208657, by connecting the IC1, IC2 and IC3 outputs of Fig. 19 to the OR inputs 11, 12 and 13 of logic interface (Fig.3), and the AND outputs 17, 18 arid 19 of the same interface logic to the IC5, IC6 and IC7 inputs of Fig. 19. The micro-computer system of the step-by-step drive is built around micro-data processor (D) which carries out the programme instructions stored in the EPROM (E). The micro-processor, on the basis of the rotor position data coming from the sensor position (B), by means of interface (C), seeks in the memory (E) the stator field configuration suitable to the step mode required by the user device. Once the configuration is found, the micro-processor sends it, by means of interface (G), to inputs OR 14, 15 and 16 of the interface logic (Fig.3). The said logic, is the key circuit for the whole step-by-step drive system. It is, in fact, by means of this circuit that the micro-computer replaces the magnetic stator field configuration generated by the rotary commutator (21) constantly present in inputs OR 11, 12 and 13, with a configuration of the stator magnetic field, selected in the memory (E) according to the sensor position (B) available in inputs OR 14, 15 and 16. The replacement occurs when the micro-computer disables, by placing at the 0 logic level (0 V.) the command electrode 20 of the said interface logic (FIG.3), the OR gates 2, 4, 6 by means of NOT gate 1, thus nullifying every effect of the rotary commutator (21) on the stator magnetic field configuration. At the same time, the said micro-data processor with the same 0 logic applied to the electrode 20, enables the OR gates 3, 5 and 7, and at the same time transfers to inputs OR 14,15 and 16 to outputs AND 17,18 and 19 the stator magnetic field configuration selected in the memory (E).

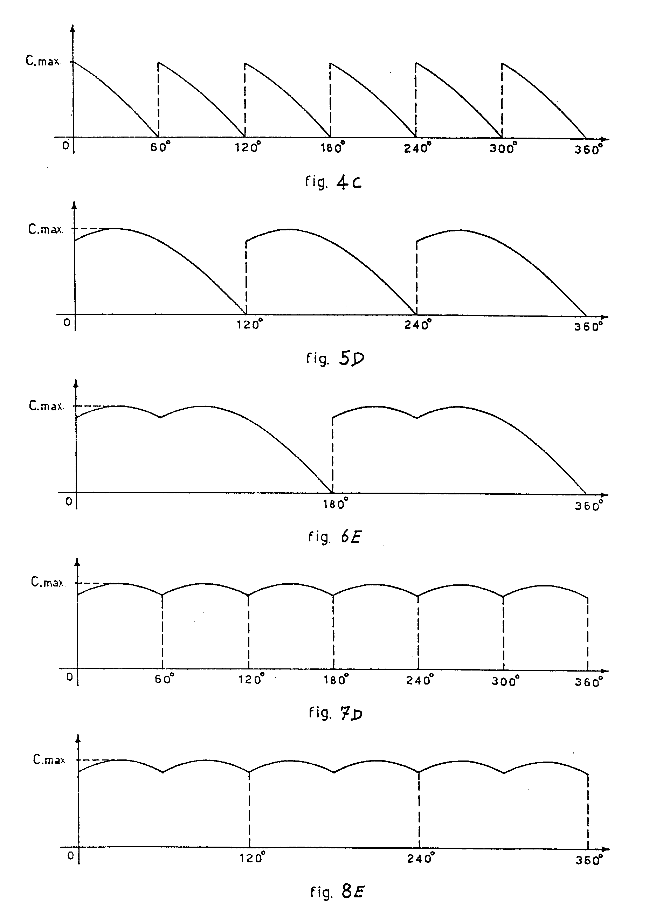

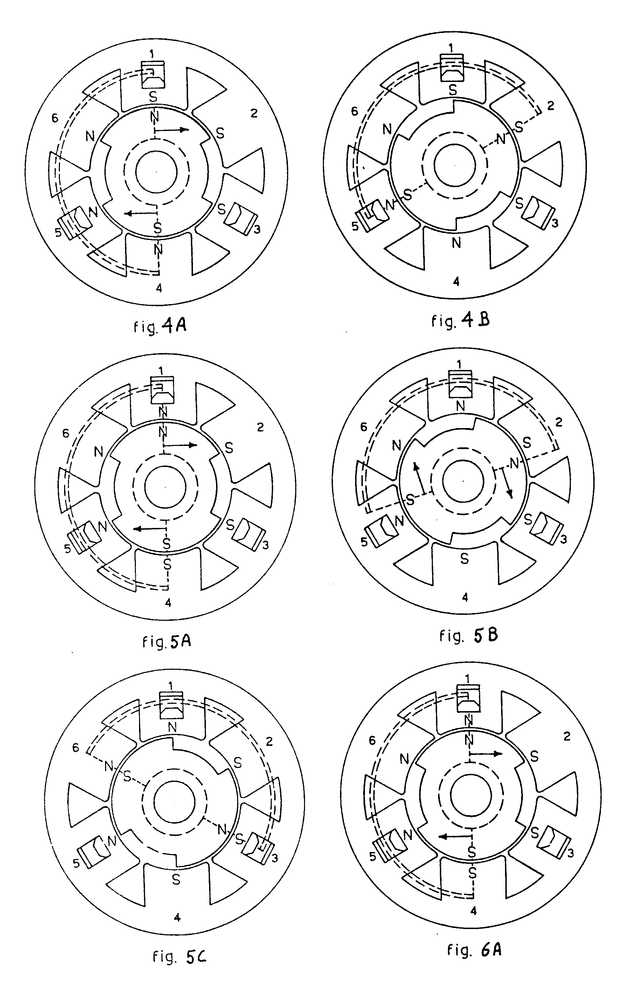

In effect, the interface logic Fig. 3 enables the micro-computer to switch the synchronous motor from the first running mode, as running motor, to the second mode, i.e., step-by step motor and vice versa, according to the logic level applied to the command electrode 20 at any given moment or at any given rotor angle. In the prototype motor, the signals generated by the coaxial position sensor (B), referring to the rotor angles of 60°, 120°, 180°, 240°, 300°, and 360° act as step-by-step synchronism impulses, i.e. they act as start and end of the step signals, being 60° the prototype motor's minimum unit step amplitude with a two-pole rotor and a hexa-pole stator. In a synchronous motor with 4-pole rotor and 12-pole stator, the minimum unit step amplitude is halved to 30°, that is, as the number of the motor's poles increases, the minimum unit rotor step amplitude decreases accordingly. TAB.2, Figures 4A and 4B, illustrate the prototype motor's rotation at a step of 60° and the decreasing sinusoidal torque. Fig.4C illustrates the succession of the six deflecting torque curves of the six 60° steps needed for a complete revolution of the rotor. By comparing the diagram in Fig.4C to the torque diagram of the synchronous motor described in the Italian priority document No 3426A/85 available for inspection in the file of EP-A-208657 one can see that the torque curve of each single 60° step is nothing else than one of six descending segments of the six synchronous motor's sinusoidal torque curves. Each 60°-step is achieved by the micro-data processor by placing at the start of the step (fig. 4A) at 0 logic (0 V.) the electrode 20 of the logic interface (Fig.3); the said logic, at the same time, substitutes the configuration of the statoric magnetic field generated by the rotary commutator 21 with a configuration of the statoric magnetic field, selected in the memory (E) in accordance to the position assumed by the sensor (B), which drives the synchronous motor with a step 60° large with a sinusoidally decreasing torque down to zero at the end of the step (Fig. 4B).

The same method is used to drive the motor for a 120°-double step rotation, with the torque of the second part of the sinusoid step decreasing, illustrated in Figs. 5A, 5B and 5C of TAB. 2, with the only difference that the micro-computer selects in the memory (E), according to the position of the sensor (B), a configuration of the statoric magnetic field which yields a torque curve as large as 120°, as shown in the Cartesian diagram of Fig.5D. In this case, also, each single torque curve in the said diagram represents only the second ascending part followed by the entire descending part of one of the motor's six sinusoidal torque curves.

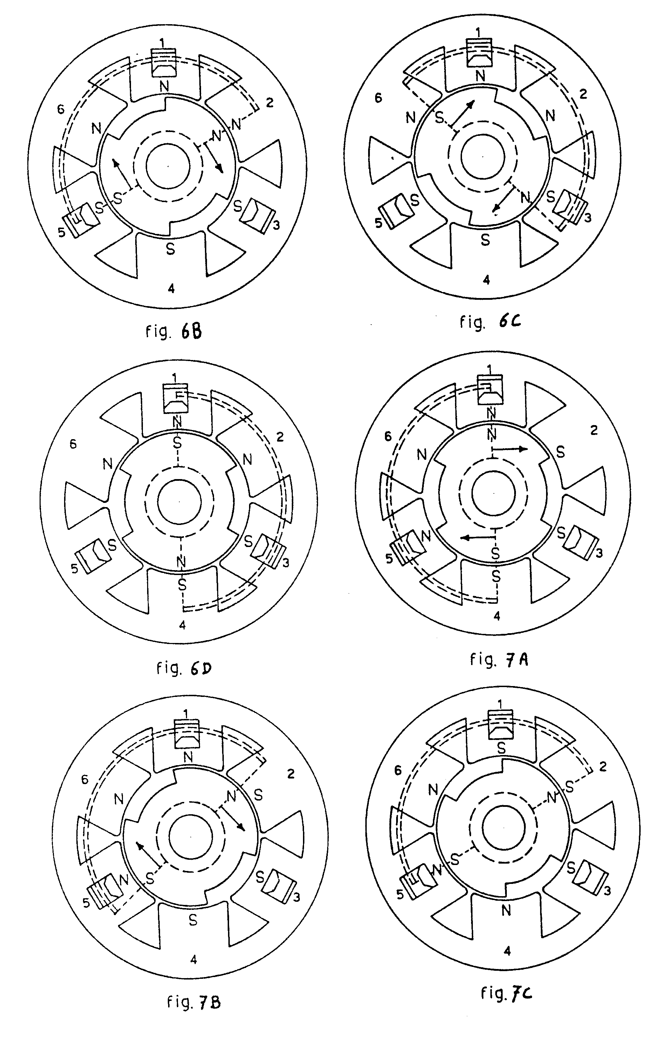

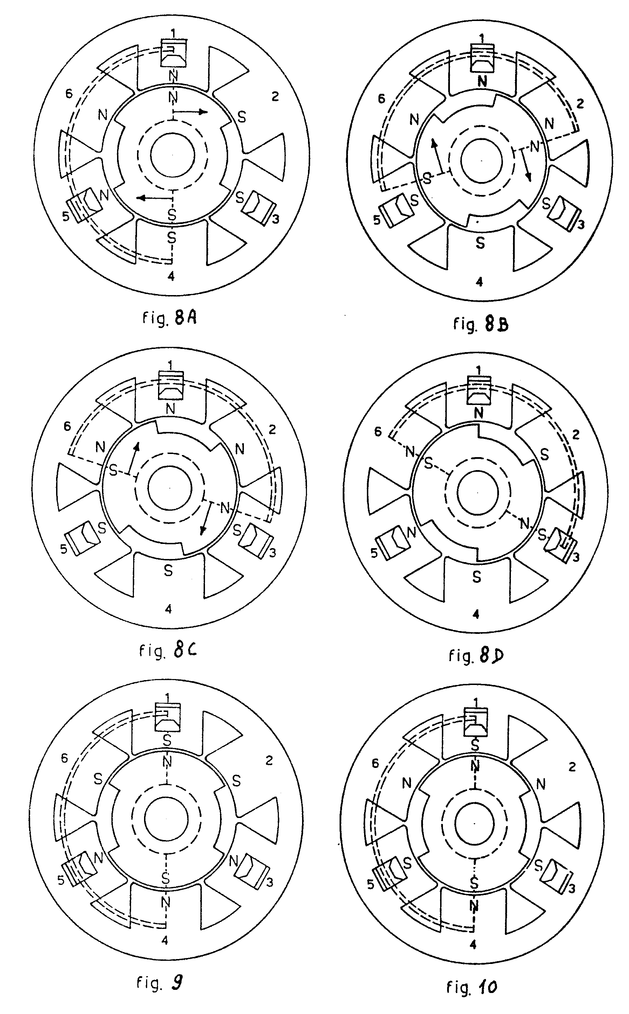

The driving motor system, in the case of a triple step 180° large, with the torque of the third part of the same step sinusoidally decreasing, is partially different, as illustrated in Figs. 6A, 6B, 6C and 6D in TAB 2 and TAB.4. The first part of amplitude (60°) of the step is achieved by the micro-computer by setting electrode 20 of the interface logic (Fig.3) at logic level 1 (+5 V.) and letting the rotary commutator (21) generate the stator field configuration. At the end of the first 60° step (Fig.6B), a step-by-step synchronism impulse signals the micro-computer to reset electrode 20 at 0 logic level (0 V.) and use the stator magnetic field configuration selected in the memory (E), in accordance with position of sensor (B), for the remaining second and third part of amplitude of 120° of the same step. It can be seen in the Cartesian diagram of Fig.6E that the first part of 60° of the triple 180° step is the active part of one of the motor's six sinusoidal torque curves of the motor driven in the first working mode as a running motor. With the same system we can drive the motor, with any given amplitude step, with the last part with a sinusoidally decreasing torque. Figures 7A 7B and 7C in TAB. 4, illustrate a one step 60° amplitude of the motor rotation at a constant deflecting torque. By examining the sequence of the above mentioned figures and of the Cartesian diagram of Fig.7D in TAB.3, it can be observed how the motor's torque suddenly drops to zero after each 60° step. This different kind of step is achieved by the micro-computer by setting the electrode 20 of the interface logic (Fig.3) at logic level 1 (+5 V.) and having the rotary commutator (21) to generate the stator magnetic field configuration of the whole step; until, at the end of step (Fig.7C), a step-by-step synchronism impulse signals the micro-computer to reset the electrode 20 of the said logic at 0 logic level, replacing the stator magnetic field configuration, generated by the rotary commutator (21), with a stator field magnetic configuration selected from memory (E) in accordance with the sensor position (B), required to set to zero the torque, thus locking the motor in the end-of-step position. The figures 8A, 8B, 8C, and 8D in TAB.5 illustrate with a diagram the motor rotation of a step 120° large at a constant torque, achieved through the same method described for the 60° step, with one only difference, i.e., the stator magnetic field configuration which locks the motor at end step (Fig.8D) is activated by a step-by-step synchronism impulse staggered of 120° from the start of the step. Figure 8E in TAB.3 shows the motor's torque curve falling sharply to zero at each 120°-step. These two above reported examples show that it is possible to drive the prototype motor with a constant torque step of any given amplitude, as long as the step be a multiple of 60°, by selecting the proper synchronism impulse which signals the micro-computer that the motor's end step position has been reached.

The figure 9 and 10 in TAB. 5, illustrate how the motor can be stopped in the end of step position, in any given point, e.g. in the two figures, using two different configurations of the statoric magnetic stator field selected in the memory (E) in accordance to the position of sensor (B). In Fig.9 the torque is zero and the motor, as a consequence, stands still because the two-pole stator field symmetry axis coincides in direction and sense with the symmetry axis of the bipolar rotoric field. In Fig. 10 the statoric hexa-polar field due to the transformation, at the end of the step, of the statoric bipolar field, creates two couples of opposed electro-magnetic fields with equal intensity,which block in a dynamic balance the motor in the point taken as examples, reducing at the same very moment the amplitude of the over swings at the end of the step.

## Claims

**1.** Synchronous AC motor driven by an inverter through a position sensor (B), wherein the synchronous AC motor (A) is driven in a second mode of working as stepper motor by means of the above mentioned position sensor (B), a microcomputer (C,D,E,F,C,H,I) and a logic interface (fig.3), through which the microcomputer substitutes the configuration of the statoric magnetic field generated by the rotary commutator (21), with a configuration of the field, selected within the memory (E) accordingly to the position of sensor (B), required to drive the synchronous motor in a second mode of working, as a single or multiple step motor.

2. Synchronous AC motor driven by an inverter through a position sensor (B),in accordance to claim 1, characterized also by the fact that the synchronous AC motor (A) is driven, in a second working mode, as a single or multiple step with a constant torque from the start to the end of the step, by a logic interface (fig.3), through which the microcalculator drives, at the start and throughout the step, the synchronous motor in the first drive mode, as a running motor using the statoric magnetic field configuration generated by a rotary commutator (21), at the end of the step, the said microcomputer substituting by means of the same logic interface (Fig.3) the said configuration of the magnetic statoric field with a configuration of the field, selected in the memory (E) according to the position of the sensor (B), necessary to put to zero the torque stopping the motor at the end of the step.

3. Synchronous AC motor driven by an inverter through a position sensor (B), in accordance claims N° 1 and 2, characterized also by the fact the synchronous AC motor can also be driven in a second working mode, as a multiple steps motor with a torque of constant value during all the first part of the step and with a decreasing value during the second part of the same step, through a logic interface (Fig.3), through which the microcalculator drives at the start and throughout the first part of the step, the synchronous motor in the first mode of working as a running motor using the configuration of the statoric magnetic field generated by a rotary commutator (21), at the start of the second part of the step, the said microcalculator substituting through the same logic interface (Fig.3) the said statoric magnetic field configuration with a configuration of the field, selected in the memory (E) according to the position of sensor (B), necessary to drive the synchronous motor during all the second part of the same step that has a torque which decreases sinusoidally down to zero value at the end of the step.

4. Synchronous AC motor driven by an inverter through a position sensor (B), in accordance to claims N° 1, 2 and 3, characterized also by the fact the synchronous AC motor (A) driven by the microcalculator through the logic interface (FIG.3) in a second mode of working, as step-by-step motor, can be stopped in the position of end of step by means of a statoric magnetic field configuration, selected in the memory (E), according to the position of the sensor (B), characterized by a total number of statoric magnetic poles equal to the number of the magnetic poles of the step-by-step driving configuration multiplied by three (FIG. 10) the step-by-step statoric bipolar field being turned itself into a blocking hexapolar field at the end of the step the said configuration, generating two electromagnetic opposed forces, with equal intensity, which block in a dynamic balance the motor at the step-end position.

**Patentansprüche**

1. Von einem Wendegetriebe mittels Lagetaster (B) gesteuerter Wechselstrom-Synchronmotor, gekennzeichnet dadurch, dass der Wechselstrom-Synchronmotor (A) in einer zweiten Funktionsweise als Schrittmotor mittels genanntem Lagetaster (B), einem Mikrorechner (C,D,E,F,G,H,I) und einer Schnittstelle (Abb.3) gesteuert wird, durch die der Mikrorechner die Struktur des durch einen Drehschalter (21) erzeugten Statormagnetfeldes mit einer im Speicher (E) je nach Lage des Tasters (B) gewählten Feldstruktur ersetzt, die zur Steuerung des Synchronmotors je nach Funktionsweise als Motor mit einem oder mehreren Schritten notwendig ist.

2. Von einem Wendegetriebe mittels Lagetaster (B) gesteuerter Wechselstrom-Synchronmotor nach Anspruch 1.), gekennzeichnet auch dadurch, dass der Wechselstrom-Synchronmotor (A) in einer zweiten Funktionsweise als Ein- oder Mehrschrittmotor mit konstantem Antriebsmoment von Schrittbeginn bis Schrittende mittels einer Schnittstelle (Abb. 3) gesteuert wird, durch die der Mikrorechner von Beginn und während der ganzen Dauer des Schrittes den Synchronmotor in der ersten Funktionsweise als traditioneller Motor mit durch einen Drehschalter (21) erzeugtem Statormagnetfeld steuert und am Schrittende durch die gleich Schnittstelle (Abb. 3) das Statormagnetfeld durch eine Feldstruktur ersetzt, die im Speicher (E) je nach Lage des Tasters (B) zur Nullung des Antriebsmoments gewählt wird und den Motor am Schrittende abstellt.

3. Von einem Wendegetriebe mittels Lagetaster (B) gesteuerter Wechselstrom-Synchronmotor nach Anspruch 1.) und 2.), gekennzeichnet auch dadurch, dass der Wechselstrom-Synchronmotor (A) in einer zweiten Funktionsweise als Mehrschrittmotor mit konstantem Antriebsmoment im ersten Schritteil und abnehmendem Antriebsmoment im ganzen zweiten Schritteil mittels einer Schnittstelle (Abb. 3) gesteuert werden kann, durch die der Mikrorechner zu Beginn und während der gesamten Dauer des ersten Schritteils den Synchronmotor als Fahrmotor unter Verwendung des durch einen Drehschalter (21) erzeugten Statormagnetfeldes steuert, während der Mikrorechner zu Beginn des zweiten Schritteils durch die gleiche Schnittstelle (Abb. 3) das Statormagnetfeld durch eine Feldstruktur ersetzt, die im Speicher (E) je nach Lage des Tasters (B) gewählt wird, die zur Steuerung des Synchronmotors während des ganzen zweiten Schritteils mit einem Antriebsmoment notwendig ist, das sinusförmig bis zur Nullung am Schrittende abnimmt.

4. Von einem Wendegetriebe mittels Lagetaster (B) gesteuerter Wechselstrom-Synchronmotor nach den Ansprüchen 1.), 2.) und 3.), gekennzeichnet auch dadurch, dass der Wechselstrom-Synchronmotor (A) gesteuert vom Mikrorechner über eine Schnittstelle (Abb.3), in einer zweiten Funktionsweise als Schrittmotor in den Positionen am Schrittende mittels einem Statormagnetfeld blockiert werden kann, das vom Speicher (E) je nach Lage des Tasters (B) gewählt wird, gekennzeichnet durch die gleiche Gesamtzahl von Statormagnetpolen wie die Magnetpole der Schrittsteuerung multipliziert mal drei (Abb. 10), das bipolare Feld der Schrittsteuerung ist in ein sechspoliges Sperrfeld am Schrittende umgewandelt, diese Struktur erzeugt zwei entgegengesetzte elektromagnetische Kraftmomente gleicher Stärke, die den Motor am Schrittende in einem dynamischen Gleichgewicht sperren.

**Revendications**

1. Moteur synchrone à courant alternatif, actionné par un inverseur, au moyen d'un capteur de position (B), caractérisé en ce que le moteur synchrone à courant alternatif (A) est actionné, dans son deuxième mode de fonctionnement, comme moteur pas-à-pas au moyen dudit capteur de position (B) au moyen d'un micro-ordinateur (C,D,E,F,G,H,I,) et d'une logique d'interface (Fig. 3), à l'aide de laquelle le micro-ordinateur remplace 1a configuration du champ magnétique à stator généré par un commutateur rotatif (21), avec une configuration du champ, sélectionnée en mémoire (E) en fonction de la position du capteur (B), servant à actionner le moteur synchrone, dans son deuxième mode de fonctionnement, comme moteur à un ou plusieurs pas.

2. Moteur synchrone à courant alternatif actionné par un inverseur au moyen d'un capteur de position (B), selon la revendication n° 1, caractérisé en ce que le moteur synchrone à courant alternatif (A) est actionné, dans son deuxième mode de fonctionnement, comme moteur à un ou plusieurs pas, avec couple moteur constant depuis le début jusqu'à la fin du pas, au moyen d'une logique d'interface (Fig. 3), à l'aide de laquelle le micro-ordinateur actionne au début et pendant toute la durée du pas, le moteur synchrone dans son premier mode de fonctionnement, comme moteur de traction, en utilisant la configuration du champ magnétique à stator généré par un commutateur rotatif (21), à la fin du pas, le dit micro-ordinateur remplace au moyen de la même logique d' interface (Fig. 3), ladite configuration du champ magnétique à stator par une configuration du champ sélectionnée en mémoire (E) en fonction de la position du capteur (B), servant à remettre à zéro le couple moteur et ainsi arrêter le moteur à la fin du pas.

3. Moteur synchrone à courant alternatif actionné par un inverseur au moyen d'un capteur de position (B), selon les revendications n° 1 et 2, caractérisé en outre en ce que le moteur synchrone à courant alternatif (A) peut être actionné, dans son deuxième mode de fonctionnement, comme moteur à plusieur pas avec couple moteur à valeur constante pendant toute la première partie du pas et décroissant pendant toute la deuxième partie de ce même pas, au moyen d'une logique d'interface (Fig. 3), à l'aide de laquelle le micro-ordinateur actionne au début et pendant toute la première partie du pas le moteur synchrone dans son premier mode de fonctionnement, comme moteur de traction utilisant la configuration du champ magnétique à stator généré par un commutateur rotatif (21), au début de la deuxième partie du pas, le micro-ordinateur remplace, grâce à cette même logique d'interface (Fig. 3), ladite configuration du champ magnétique à stator, par une configuration du champ sélectionnée en mémoire (E) en fonction de la position du capteur (B), servant à actionner le moteur synchrone pendant toute la deuxième partie du même pas avec un couple moteur décroissant de façon sinusoïdale pour se remettre à zéro à la fin du pas.

4. Moteur synchrone à courant alternatif actionné par un inverseur, au moyen d'un capteur de position (B), selon les revendications n° 1, 2, et 3, caractérisé en outre en ce que le moteur synchrone à courant alternatif (A), actionné par le micro-ordinateur au moyen de la logique d'interface (Fig. 3), dans son deuxième mode de fonctionnement, comme moteur pas-à-pas, peut être bloqué dans la position de fin de pas, grâce à une configuration du champ magnétique à stator, sélectionnée en mémoire (E), en fonction de la position du capteur (B), caractérisée par un nombre total de pôles magnétiques à stator correspondant au nombre de pôles magnétiques de la configuration d'actionnement pas-à-pas, multiplié par trois (Fig. 10), le champ bipolaire d'actionnement pas-à-pas s'est transformé en un champ hexapolaire de blocage en fin de pas, ladite configuration génère deux couples de forces électro-magnétiques opposées de même intensité, qui bloquent le moteur en équilibre dynamique dans la position de fin de pas.

fig. 1

fig. 2

fig. 3

fig. 4c

fig. 5D

fig. 6E

fig. 7D

fig. 8E

fig. 4A

fig. 4B

Fig. 5A

Fig. 5B

fig. 5C

Fig. 6A

fig. 6B

fig. 6C

fig. 6D

fig. 7A

fig. 7B

fig. 7C

fig. 8A

fig. 8B

fig. 8C

fig. 8D

fig. 9

fig. 10